# EUROPÄISCHE PATENTANMELDUNG

(11) **EP 3 450 740 A1**
(43) Veröffentlichungstag der Anmeldung: **06.03.2019**
(21) Anmeldenummer: 18185460.5
(22) Anmeldetag: 25.07.2018
(51) Int. Cl.: F02M 59/36, F02M 63/00

(54) **KRAFTSTOFFZUMESSEINRICHTUNG EINES HOCHDRUCKEINSPRITZSYSTEMS**

(30) Priorität: 31.08.2017 DE 102017120004
(71) Anmelder: MAN Energy Solutions SE, 86153 Augsburg (DE)
(72) Erfinder: Meixner, Markus, 86154 Augsburg (DE)

(57) **Zusammenfassung**

Kraftstoffzumesseinrichtung eines Hochdruckeinspritzsystems, mit einem Ventil- oder Drosselzylinder (6), mit einem innerhalb des Ventil- oder Drosselzylinders (6) verlagerbaren Ventil- oder Drosselkörper (7), dessen Relativstellung einen Kraftstoffdurchfluss durch die Kraftstoffzumesseinrichtung bestimmt, mit einem Aktuator (8) zur Veränderung der Relativstellung des Ventil- oder Drosselkörpers (7), wobei der Aktuator (8) als Schrittmotor ausgebildet ist. Fig. 1

## Beschreibung

Die Erfindung betrifft eine Kraftstoffzumesseinrichtung eines Hochdruckeinspritzsystems.

Aus der DE 10 2013 212 121 A1 ist eine Kraftstoffzumesseinrichtung eines Hochdruckeinspritzsystems mit den Merkmalen des Oberbegriffs des Anspruchs 1 bekannt. So verfügt diese Kraftstoffzumesseinrichtung über einen Ventilzylinder, wobei innerhalb des Ventilzylinders ein als Ventilkolben ausgebildeter Ventilkörper verlagerbar aufgenommen ist, dessen Relativstellung einen Kraftstoffdurchfluss durch die Kraftstoffzumesseinrichtung bestimmt. Die Relativstellung des Ventilkörpers ist nach diesem Stand der Technik über einen Elektromagneten im Zusammenspiel mit einem Federelement veränderbar.

Die aus dem Stand der Technik bekannte Kraftstoffzumesseinrichtung verfügt über den Nachteil, dass infolge der Eigenschaften des Elektromagneten die Kraftstoffzumesseinrichtung hysteresebehaftet ist. Ferner muss das Federelement exakt auf den Elektromagneten abgestimmt werden, wodurch die Herstellung der aus dem Stand der Technik bekannten Kraftstoffzumesseinrichtung aufwendig und teuer ist.

Hiervon ausgehend liegt der vorliegenden Erfindung die Aufgabe zugrunde, eine neuartige Kraftstoffzumesseinrichtung eines Hochdruckeinspritzsystems zu schaffen. Diese Aufgabe wird durch eine Kraftstoffzumesseinrichtung nach Anspruch 1 gelöst. Erfindungsgemäß ist der Aktuator als Schrittmotor ausgebildet.

Die erfindungsgemäße Kraftstoffzumesseinrichtung nutzt als Aktuator einen Schrittmotor. Auf einen Elektromagneten, der mit einem Federelement zusammenwirkt, wird verzichtet. Elektromotorische Schrittmotoren können exakt eine Position anfahren und hinsichtlich ihrer Position überwacht werden, sodass die erfindungsgemäße Kraftstoffzumesseinrichtung nicht hysteresebehaftet ist. Der Kraftstoff mit einer höheren Genauigkeit zudosiert werden.

Vorzugsweise dreht der Schrittmotor den Ventil- oder Drosselkörper relativ zum Ventil- oder Drosselzylinder um seine Längsachse. Der Kraftstoff mit einer hohen Genauigkeit zudosiert werden.

Nach einer Weiterbildung der Erfindung ist der Ventil- oder Drosselzylinder ein Hohlzylinder mit einer Zylinderwandung, wobei die Zylinderwandung des Ventil- oder Drosselzylinders einen Innenraum des Ventil- oder Drosselzylinders zur Aufnahme des Ventil- oder Drosselkörpers definiert, und wobei die Zylinderwandung des Ventil- oder Drosselzylinders eine Durchflussöffnung für Kraftstoff aufweist, über die Kraftstoff in den Innenraum des Ventil- oder Drosselzylinders und damit in Richtung auf den Ventil- oder Drosselkörper führbar ist. Der Ventil- oder Drosselkörper ist ein Hohlzylinder mit einer Zylinderwandung, wobei die Zylinderwandung des Ventil- oder Drosselkörpers einen Innenraum des Ventil- oder Drosselkörpers definiert, und wobei die Zylinderwandung des Ventil- oder Drosselkörpers eine Durchflussöffnung für Kraftstoff aufweist, über die Kraftstoff in den Innenraum des Ventil- oder Drosselkörpers führbar ist. Der Ventil- oder Drosselkörper weist an einem axialen Ende eine Durchflussöffnung auf, die mit einer Durchflussöffnung an einem angrenzenden axialen Ende des Ventil- oder Drosselzylinders kommuniziert, über die Kraftstoff aus dem Innenraum abführbar ist. Diese Merkmale erlauben eine kompakte Bauform einer nicht hysteresebehafteten Kraftstoffzumesseinrichtung eines Hochdruckeinspritzsystems. Kraftstoff kann hochgenau zudosiert werden, und zwar bei einfacher Bauform der Kraftstoffzumesseinrichtung.

Nach einer bevorzugten Weiterbildung der Erfindung weist die Zylinderwandung des Ventil- oder Drosselkörpers radial außen eine Fläche mit einem sich über den Umfang verändernden Außenradius auf, wobei die Zylinderwandung des Ventil- oder Drosselzylinders radial innen angrenzend an die radial äußere Fläche des Ventil- oder Drosselkörpers im Querschnitt vorzugsweise kreisartig konturiert ist. Auch diese Merkmale dienen einer hochgenauen Kraftstoffzudosierung bei einer einfachen, nicht hysteresebehafteten Kraftstoffzumesseinrichtung.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen ersten Querschnitt durch eine erfindungsgemäße Kraftstoffzumesseinrichtung;
- Fig. 2:: einen zweiten Querschnitt durch eine erfindungsgemäße Kraftstoffzumesseinrichtung;
- Fig. 3:: das Detail III der Fig. 2; und
- Fig. 4:: eines Explosionsdarstellung von Baugruppen der erfindungsgemäßen Kraftstoffzumesseinrichtung.

Die Erfindung betrifft eine Kraftstoffzumesseinrichtung eines Hochdruckeinspritzsystems, insbesondere eines Common-Rail-Kraftstoffsystems einer Schiffsdieselbrennkraftmaschine. Über die Kraftstoffzumesseinrichtung wird Kraftstoff in einen Kraftstoffspeicher des Hochdruckeinspritzsystems, in ein sogenanntes Common-Rail, nachgefördert, wozu ein Druck im Common-Rail gemessen wird und abhängig hiervon die Kraftstoffzumesseinrichtung angesteuert wird, um die Menge des über die Kraftstoffzumesseinrichtung ins Common-Rail geführten Kraftstoffs und damit den Druck im Common-Rail einzustellen.

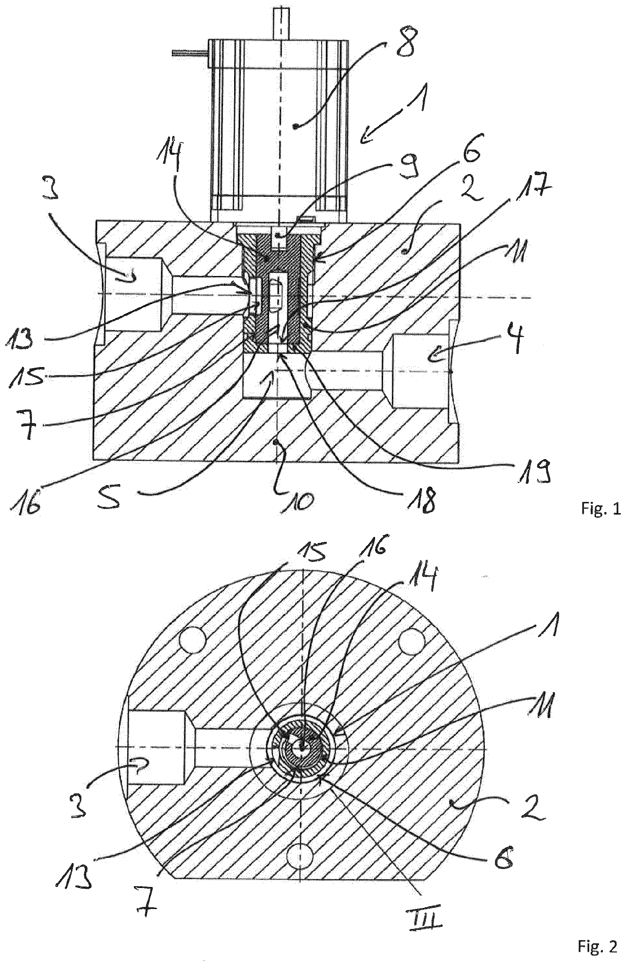

Fig. 1 und 2 zeigen jeweils einen Querschnitt durch eine erfindungsgemäße Kraftstoffzumesseinrichtung 1 in unterschiedlichen Schnittrichtungen, nämlich zusammen mit einem die Kraftstoffzumesseinrichtung 1 aufnehmenden Gehäuseblock 2, der einerseits einen Zulaufanschluss 3 für Kraftstoff und andererseits einen Ablaufanschluss 4 für den Kraftstoff aufweist. An den Zulaufanschluss 3 sowie an den Ablaufanschluss 4 sind Kraftstoffleitungen anschließbar, wobei die an den Zulaufanschluss 3 angreifende Kraftstoffleitung insbesondere zu einer Hochdruckpumpe führt, und wobei die an den Kraftstoffablaufanschluss 4 anschließende Kraftstoffleitung insbesondere zu einem Druckspeicher eines Hochdruckeinspritzsystems führt.

Der Gehäuseblock 2 definiert einen Hohlraum 5, welcher der Aufnahme von Baugruppen der Kraftstoffzumesseinrichtung 1 dient, nämlich von Baugruppen der Kraftstoffzumesseinrichtung 1, welche den Kraftstoffdurchfluss durch die Kraftstoffzumesseinrichtung 1 und damit den Kraftstoffdurchfluss ausgehend vom Kraftstoffzulaufanschluss 3 in Richtung auf den Kraftstoffablaufanschluss 4 bestimmen.

Die Kraftstoffzumesseinrichtung 1 umfasst einen Ventil- oder Drosselzylinder 6. Weiterhin umfasst die Kraftstoffzumesseinrichtung einen Ventil- oder Drosselkörper 7, der im Ventil- oder Drosselzylinder 6 verlagerbar aufgenommen ist, wobei die Relativstellung des Ventil- oder Drosselkörpers 7 den Kraftstoffdurchfluss durch die Kraftstoffzumesseinrichtung 1 bestimmt.

Mit dem Ventil- oder Drosselkörper 7 wirkt ein Aktuator 8 zusammen, der als Schrittmotor ausgebildet ist, wobei über den Schrittmotor 8 die Relativstellung des Ventil- und Drosselkörpers 7 innerhalb des Ventil- oder Drosselzylinders 6 verändert werden kann. Gemäß Fig. 1 ist der Ventil- oder Drosselkörper 7 mit einer Antriebswelle 9 des als Schrittmotor 8 ausgebildeten Aktuators verbunden.

Der Schrittmotor 8 dreht den Ventil- oder Drosselkörper 7 relativ zum Ventil- oder Drosselzylinder 6 um seine Längsachse 10, wobei die Längsachse 10 des Ventil- oder Drosselkörpers 7 mit der Längsachse des Ventil- oder Drosselzylinders 6 und damit mit der Längsachse der Antriebswelle 9 des Schrittmotors 8 zusammenfällt.

Der Ventil- oder Drosselzylinder 6 ist als Hohlzylinder ausgeführt und verfügt über eine Zylinderwandung 11, die einen Innenraum 12 des Ventil- oder Drosselzylinders 6 zur Aufnahme des Ventil- oder Drosselkörpers 7 definiert. In diese Zylinderwandung 11 des Ventil- oder Drosselzylinders 6 ist eine sich in Radialrichtung erstreckende Durchflussöffnung 13 für Kraftstoff eingebracht, über die Kraftstoff in den Innenraum 12 des Ventil- oder Drosselzylinders 6 einströmen und damit in Richtung auf den im Innenraum 12 des Ventil- oder Drosselzylinders 6 positionierten Ventil- oder Drosselkörper 7 geführt werden kann.

Kraftstoff strömt demnach ausgehend vom Kraftstoffzulaufanschluss 3 über die Durchlassöffnung 13 in der Zylinderwandung 11 des Ventil- oder Drosselzylinders 6 in den Innenraum 12 desselben und damit in Richtung auf den im Innenraum 12 des Ventil- oder Drosselzylinders 6 angeordneten Ventil- oder Drosselkörper 7.

Der Ventil- oder Drosselkörper 7 ist ebenfalls als Hohlzylinder mit einer Zylinderwandung 14 ausgeführt. In die Zylinderwandung 14 des Ventil- oder Drosselkörpers 7 ist wiederum eine sich in Radialrichtung erstreckende Durchflussöffnung 15 eingebracht, über die Kraftstoff in einen vom Hohlzylinder des Ventil- oder Drosselkörpers 7 definierten Innenraum 16 des Ventil- oder Drosselkörpers 7 geführt werden kann.

Kraftstoff, welcher über die Durchflussöffnung 13 des Ventil- oder Drosselzylinders 6 in den Innenraum 12 des Ventil- oder Drosselzylinders 6 einströmt, kann über die Durchflussöffnung 15 des Ventil- oder Drosselkörpers 7 in den Innenraum 16 des Ventil- oder Drosselkörpers 7 einströmen.

Der Ventil- oder Drosselkörper 7 weist an einem axialen Ende eine Durchflussöffnung 17 auf, die mit einer Durchflussöffnung an einem angrenzenden axialen Ende des Ventil- oder Drosselzylinders 6 kommuniziert, wobei über diese beiden kommunizierenden, sich in Axialrichtung erstreckenden Durchflussöffnungen 17, 18 Kraftstoff aus dem Innenraum 16 des Ventil- oder Drosselkörpers 7 abführbar ist, und zwar in Richtung auf den Kraftstoffablassanschluss 4.

Kraftstoff, der ausgehend vom Kraftstoffzulaufanschluss 3 in Richtung auf den Kraftstoffablaufanschluss 4 über die Kraftstoffzumesseinrichtung 1 zu führen ist, strömt ausgehend vom Kraftstoffzulaufanschluss 3 über die sich in Radialrichtung erstreckende Durchflussöffnung 13 des Ventil- oder Drosselzylinders 6 in den Innenraum 12 des Ventil- oder Drosselzylinders 6, über die sich in Radialrichtung erstreckende Durchflussöffnung 15 des Ventil- oder Drosselkörpers 7 in den Innenraum 16 des Ventil- oder Drosselkörpers 7, und über die sich in Axialrichtung erstreckenden Durchflussöffnungen 17 und 18 aus dem Innenraum 16 des Ventil- oder Drosselkörpers 7 in Richtung auf den Kraftstoffablaufanschluss 4.

Im Bereich des axialen Endes, in welchem der Ventil- oder Drosselzylinder 6 die sich in Axialrichtung erstreckende Durchflussöffnung 18 aufweist, die mit der entsprechenden Durchflussöffnung 17 des Ventil- oder Drosselkörpers 7 kommuniziert, bildet der Ventil- oder Drosselzylinder 6 einen Anschlag 19 aus, der die Einführtiefe des Ventil- oder Drosselkörpers 7 in den Innenraum 12 des Ventil- oder Drosselzylinders 6 begrenzt und so der Positionierung des Ventil- oder Drosselkörpers 7 im Innenraum des Ventil- oder Drosselzylinders 6 dient. Am gegenüberliegenden axialen Ende ist der Ventil- oder Drosselzylinder 6 offen ausgebildet, um über dieses Ende den Ventil- oder Drosselkörpers 7 im Innenraum 12 des Ventil- oder Drosselzylinders 6 zu positionieren, wobei jedoch der Innenraum 16 des Ventil- oder Drosselkörpers 7 an diesem axialen Ende geschlossen ausgebildet ist, sodass demnach Kraftstoff an diesem axialen Ende nicht aus dem Innenraum 16 des Ventil- oder Drosselkörpers 7 ausströmen kann.

Die Zylinderwandung 14 des Ventil- oder Drosselkörpers 7 weist radial außen im Querschnitt eine Fläche bzw. Mantelfläche 20 mit einem sich über den Umfang derselben verändernden Außenradius auf, die sozusagen spiralartig konturiert ist. Unter einer sozusagen spiralartig konturierten Fläche 20 soll verstanden werden, dass sich ein die radial äußere Fläche 20 definierender Außenradius außerhalb des Bereichs der Durchflussöffnung 15 ausgehend von einem Rand der Durchflussöffnung 15, an welchem der Außenradius maximal ist, in Richtung auf den entfernt liegenden anderen Rand der Durchflussöffnung 15, an welchem der Außenradius minimal ist, vorzugsweise kontinuierlich reduziert. Im Bereich der Durchflussöffnung 15 vergrößert sich der Außenradius wieder auf den maximalen Außenradius.

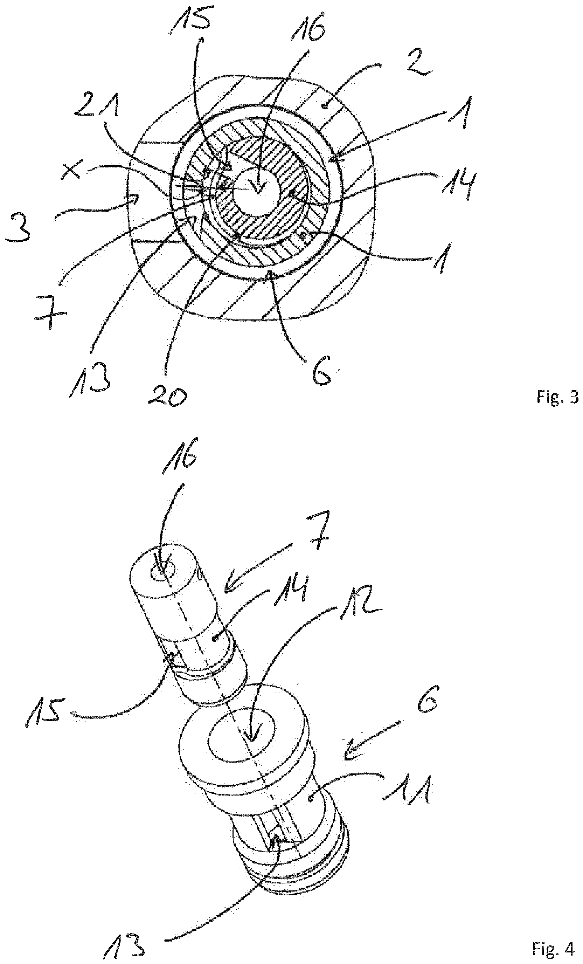

Die Zylinderwandung 12 des den Ventil- oder Drosselkörper 7 aufnehmenden Ventil- oder Drosselzylinders 6 ist radial innen angrenzend an die radial äußere Fläche 20 des Ventil- oder Drosselkörpers 7 im Querschnitt kreisartig konturiert, verfügt also über eine im Querschnitt kreisartig konturierte radial innere Fläche 21. Abhängig von der Relativposition des Ventil- oder Drosselkörpers 7 innerhalb des Ventil- oder Drosselzylinders 6 verändert sich der in Fig. 3 durch das Maß X visualisierte Abstand zwischen einer Austrittskante der sich in Radialrichtung erstreckenden Durchflussöffnung 13 des Ventil- oder Drosselzylinders 6 und der radial äußeren Fläche 20 des Ventil- oder Drosselkörpers 7, wobei dieser Abstand X bestimmt, welche Menge an Kraftstoff ausgehend vom Kraftstoffzulaufanschluss 3 bzw. über die sich in Radialrichtung erstreckenden Durchflussöffnungen 13, 15 in Richtung auf den Kraftstoffablaufanschluss 4 strömen kann.

Die hier vorliegende Erfindung schlägt demnach eine völlig neuartige Kraftstoffzumesseinrichtung 1 eines Hochdruckeinspritzsystems einer Brennkraftmaschine vor, die über einen Ventil- oder Drosselkörper 7 verfügt, der mit Hilfe eines als Schrittmotor 8 ausgebildeten Aktuators innerhalb eines Ventil- oder Drosselzylinders 6 rotatorisch um seine Längsmittelachse 10 gedreht werden kann.

Der Ventil- oder Drosselzylinder 6 sowie der Ventil- oder Drosselkörper 7 verfügen über sich in Radialrichtung erstreckende Durchflussöffnungen 13 und 15, über die Kraftstoff in den Innenraum 6 des Ventil- oder Drosselkörpers 7 einströmen kann. Die relative Drehposition des Ventil- oder Drosselkörpers 7 bestimmt dabei diejenige Kraftstoffmenge, die über die radialen Durchflussöffnungen 13 und 15 in den Innenraum 16 des Ventil- oder Drosselkörpers 7 strömen kann. Über kommunizierende, sich in Axialrichtung erstreckende Durchflussöffnungen 17, 18 kann der Kraftstoff aus dem Innenraum 16 des Ventil- oder Drosselkörpers 7 abströmen.

Die Erfindung erlaubt eine hochgenaue Zudosierung von Kraftstoff über die Kraftstoffzumesseinrichtung, da dieselbe nicht hysteresebehaftet ist.

Die Position des als Schrittmotor 8 ausgebildeten Aktuators und damit die Position des Ventil- oder Drosselkörpers 7 kann stets exakt eingestellt und überwacht werden.

### Bezugszeichenliste

- 1: Kraftstoffzumesseinrichtung
- 2: Gehäuseblock
- 3: Kraftstoffzulaufanschluss
- 4: Kraftstoffablaufanschluss
- 5: Hohlraum
- 6: Ventil- oder Drosselzylinder
- 7: Ventil- oder Drosselkörper
- 8: Schrittmotor
- 9: Antriebswelle
- 10: Längsmittelachse
- 11: Zylinderwandung
- 12: Innenraum
- 13: Durchflussöffnung
- 14: Zylinderwandung
- 15: Durchflussöffnung
- 16: Innenraum
- 17: Durchflussöffnung
- 18: Durchflussöffnung
- 19: Anschlag
- 20: Fläche
- 21: Fläche

## Patentansprüche

1. Kraftstoffzumesseinrichtung (1) eines Hochdruckeinspritzsystems,
mit einem Ventil- oder Drosselzylinder (6),
mit einem innerhalb des Ventil- oder Drosselzylinders (6) verlagerbaren Ventil- oder Drosselkörper (7), dessen Relativstellung einen Kraftstoffdurchfluss durch die Kraftstoffzumesseinrichtung bestimmt,
mit einem Aktuator (8) zur Veränderung der Relativstellung des Ventil- oder Drosselkörpers (7), **dadurch gekennzeichnet, dass**
der Aktuator (8) als Schrittmotor ausgebildet ist.

2. Kraftstoffzumesseinrichtung nach Anspruch 1, **dadurch gekennzeichnet, dass** der Schrittmotor (8) den Ventil- oder Drosselkörper (7) relativ zum Ventil- oder Drosselzylinder (6) um seine Längsachse (10) dreht.

3. Kraftstoffzumesseinrichtung nach Anspruch 1 oder 2, **dadurch gekennzeichnet, dass** der Ventil- oder Drosselzylinder (6) ein Hohlzylinder mit einer Zylinderwandung (11) ist, wobei die Zylinderwandung (11) einen Innenraum (12) zur Aufnahme des Ventil- oder Drosselkörpers (7) definiert, und wobei die Zylinderwandung (11) eine Durchflussöffnung (13) für Kraftstoff aufweist, über die Kraftstoff in den Innenraum (12) des Ventil- oder Drosselzylinders (6) und damit in Richtung auf den Ventil- oder Drosselkörpers (7) führbar ist.

4. Kraftstoffzumesseinrichtung nach einem der Ansprüche 1 bis 3, **dadurch gekennzeichnet, dass** der Ventil- oder Drosselkörper (7) ein Hohlzylinder mit einer Zylinderwandung (14) ist, wobei die Zylinderwandung (14) einen Innenraum (16) definiert, und wobei die Zylinderwandung (14) eine Durchflussöffnung (15) für Kraftstoff aufweist, über die Kraftstoff in den Innenraum (16) des Ventil- oder Drosselkörpers (7) führbar ist.

5. Kraftstoffzumesseinrichtung nach Anspruch 4, **dadurch gekennzeichnet, dass** die Zylinderwandung (14) des Ventil- oder Drosselkörpers (7) radial außen eine Fläche (20) mit einem sich über den Umfang verändernden Außenradius aufweist.

6. Kraftstoffzumesseinrichtung nach Anspruch 5, **dadurch gekennzeichnet, dass** die Zylinderwandung (11) des Ventil- oder Drosselzylinders (6) radial innen angrenzend an die radial äußere Fläche (20) des Ventil- oder Drosselkörpers (7) eine im Querschnitt kreisartig konturierte Fläche (21) aufweist.

7. Kraftstoffzumesseinrichtung nach einem der Ansprüche 4 bis 5, **dadurch gekennzeichnet, dass** der Ventil- oder Drosselkörper (7) an einem axialen Ende eine Durchflussöffnung (17) aufweist, die mit einer Durchflussöffnung (18) an einem angrenzenden axialen Ende des Ventil- oder Drosselzylinders (6) kommuniziert und über die Kraftstoff aus dem Innenraum (16) des Ventil- oder Drosselkörpers (7) abführbar ist.

8. Kraftstoffzumesseinrichtung nach Anspruch 7, **dadurch gekennzeichnet, dass** der Ventil- oder Drosselzylinder (6) an dem die Durchflussöffnung (18) aufweisenden axialen Ende einen Anschlag (19) für die Positionierung des Ventil- oder Drosselkörpers (7) ausbildet.

9. Kraftstoffzumesseinrichtung nach Anspruch 8, **dadurch gekennzeichnet, dass** der Ventil- oder Drosselzylinder (6) an dem gegenüberliegenden Ende eine Öffnung für die Aufnahme des Ventil- oder Drosselkörpers (7) aufweist.
